# EUROPEAN PATENT APPLICATION

(11) **EP 3 778 806 A1**
(43) Date of publication of application: **17.02.2021**
(21) Application number: 18913718.5
(22) Date of filing: 06.04.2018
(51) Int. Cl.: C09D 121/00, C09D 7/20, C09D 7/61, B33Y 10/00, B33Y 70/00, B33Y 80/00

(54) **COATING LIQUID COMPOSITION FOR 3D MODEL AND METHOD FOR MANUFACTURING 3D MODEL BY USING SAME**

(30) Priority: 02.04.2018 KR 20180038113
(71) Applicant: Anymedi Inc., Seoul 05510 (KR); The Asan Foundation, Seoul 05505 (KR); University Of Ulsan Foundation For Industry Cooperation, Ulsan 44610 (KR)
(72) Inventor: KIM, Guk Bae, Seoul 02624 (KR); KO, Kyung Hyun, Goyang-si Gyeonggi-do 10513 (KR); LIM, Min Je, Goyang-si Gyeonggi-do 10550 (KR); KIM, Namkug, Seoul 05504 (KR); YANG, Dong Hyun, Seoul 05506 (KR); YUN, Tae Jin, Seoul 02750 (KR); PARK, Chun Soo, Seoul 06320 (KR)
(74) Representative: dompatent von Kreisler Selting Werner - Partnerschaft von Patent- und Rechtsanwälten mbB
(86) International application number: PCT/KR2018/004097
(87) International publication number: WO 2019/194338

(57) **Abstract**

The present disclosure relates to a coating solution composition for a 3D model, that includes a rubber material and an organic solvent, a preparation method thereof, and a preparation method of a 3D model using the same. When a 3D model is coated using the coating solution composition for a 3D model of the present disclosure, the coated 3D model will have a similar elasticity and strength as those of an organ, thus enabling surgical simulation, and therefore, it can be used in surgeries that require surgical simulation due to the small size of pediatric hearts and the like and variety and complexity of related diseases, thereby inducing successful surgeries, and thus it can be widely used in the medical industry.

## Description

### 1. Field

The present disclosure relates to a coating solution composition that includes a rubber material and an organic solvent, a preparation method thereof, and a preparation method for a 3D model using the same.

Specifically, the present disclosure relates to a coating solution composition for a 3D model, that includes a rubber material and an organic solvent, and that provides elasticity and strength similar to those of an organ, thereby enabling a surgical simulation and a successful surgery through the same, a preparation method thereof, and a preparation method for a 3D model using the same.

### 2. Background

In general, physical deformities are found in about 4 to 5 babies in every 100 newborns, and congenital heart deformities are found in about 1 in every 100 newborns, and this occurs at about the same frequency across different countries and races. Due to unknown causes at birth, these babies are born with deformities and dysfunction of the heart. Formation of a fetus's heart is already completed before the 3^{rd} month of pregnancy, and congenital heart disease occurs at the early stages of pregnancy due to abnormalities in the process where the fetus's heart is formed.

Since it is not possible to administer general contrast agents for operations of pediatric congenital heart deformities, it is not only necessary for an experienced radiology specialist to be present when taking CT scans and the like to adjust the administration and timing of the contrast agents, but also due to limitations regarding equipment and time, the obtained medical images have low accuracy unlike in adult cases, which is a problem. Even during the actual surgery, since the surgery is conducted to a very small heart of about 5 cm X 5 cm, extremely difficult technique is required.

Therefore, in surgeries such as those for pediatric congenital heart deformities, which are very small in size and have various related diseases, preoperative simulation plays a very important role in inducing a successful surgery. Preoperative simulations using 3D models prepared using 3D printing and the like based on CT images are widely used.

However, in such a case of a preoperative simulation using a 3D model prepared through 3D printing and the like, not only the texture of the 3D model is different from the texture of the actual organ such as the heart, but also problems such as being torn during suturing may occur.

Accordingly, the present inventors have made diligent efforts to provide a 3D model having the same elasticity and strength as an actual organ in order to induce a successful surgery through preoperative simulation of a pediatric heart and the like, and as a result, confirmed that by coating the 3D model with a coating solution composition that includes a rubber material such as silicone and the like, and an organic solvent, it is possible to prepare a 3D model having the same texture as an actual organ without being torn during suturing, and thus completed the present disclosure.

### SUMMARY

A purpose of the present disclosure is to provide a coating solution composition for a 3D model, that includes a rubber material and an organic solvent.

Another purpose of the present disclosure is to provide a preparation method for a coating solution composition for a 3D model, that includes mixing a rubber material and an organic solvent.

Another purpose of the present disclosure is to provide a preparation method for a 3D model, that includes coating a 3D printing model with the aforementioned coating solution composition for a 3D model.

In order to achieve the aforementioned purposes, the present disclosure provides a coating solution composition for a 3D model, that includes a rubber material and an organic solvent.

The present disclosure also provides a preparation method for a coating solution composition for a 3D model, that includes mixing a rubber material and an organic solvent.

The present disclosure also provides a preparation method for a 3D model, that includes coating the 3D model with the aforementioned coating solution composition for a 3D printing model.

When a 3D model is coated using the coating solution composition for a 3D model of the present disclosure, the coated 3D model will have a similar elasticity and strength as those of an organ, thus enabling surgical simulation, and therefore, it can be used in surgeries that require surgical simulation due to the small size of pediatric hearts and the like and variety and complexity of related diseases, thereby inducing successful surgeries, and thus it can be widely used in the medical industry.

### BRIEF DESCRIPTION OF THE DRAWINGS

FIG. 1 illustrates a specimen model for a suture test of Example 4;
FIG. 2 illustrates a schematic diagram of a suture test process of Example 4;
FIG. 3 illustrates a specimen suture test result of Example 4, (a) being the case where the specimen model is not coated with the coating solution composition of the present disclosure, and (b) being the case where the specimen model is coated with the coating solution composition of the present disclosure;
FIG. 4 illustrates a 3D heart model coated with coating solution composition for a 3D model 2 of the present disclosure used in the suture test of Example 4; and
FIG. 5 illustrates the suture test process of Example 4, (a) being a vascular suture simulation process, and (b) being a Ventricular Septal Defect (VSD) closure simulation process.

### DETAILED DESCRIPTION

Unless otherwise defined, all technical and scientific terms used in the present specification have the same meaning as commonly understood by a person skilled in the art to which the present disclosure belongs. Generally, the nomenclature used in the present specification is well known and commonly used in the related art.

Specific structural or functional descriptions presented in the embodiments of the present disclosure are exemplified only for the purpose of describing the embodiments according to the concept of the present disclosure, and the embodiments according to the concept of the present disclosure may be implemented in various forms. In addition, it should not be construed as being limited to the embodiments described in the present specification, and should be understood as including all modifications, equivalents, and substitutes included in the spirit and scope of the present disclosure.

In one aspect, the present disclosure relates to a coating solution composition for a 3D model, that includes a rubber material and an organic solvent.

The rubber material is characterized to be one or more selected from a group consisting of silicone, urethane, styrene butadiene rubber (SBR), chloroprene rubber (CR), chlorinated polyethylene (CPE), butadiene rubber (BR), styrene-butadiene (SB), copolymer latex, ethylene propylene diene monomer (EPDM), ethylene vinyl acetate (EVA), styrene butadienestyrene (SBS), acrylic rubber (ACM/ANM), sulfide polymer, nitrile rubber (NBR), chloroprene rubber (CR), chlorosulfonated polyethylene rubber (CSM), butyl rubber (isobutylene isoprene rubber, IIR), and fluororubber (FPM), but there is no limitation thereto.

In the present disclosure, the organic solvent is characterized to be one or more selected from a group consisting of acetone, cyclohexane, chloroform, 1,2-dichloroethane, toluene, trichloroethane, trichlorobenzene, benzene carbon tetrachloride, chlorobenzene, tetrahydrofuran (THF), xylene , tertiary butyl acetate, heptane, hexane, dimethyl ether, 2-butanone, methanol, butanone and naphtha, but there is not limited thereto.

In the present disclosure, tin may be further included as a catalyst.

In the present invention, with respect to a total of 100% by weight of the coating solution composition for a 3D model, the rubber material may be, preferably, 30 to 50% by weight. If the content of the rubber material exceeds 50% by weight, it is difficult to form a uniform coating thickness, decreasing the ease of operation, and if the content of the rubber material is less than 30% by weight, it is not possible to express the property of the actual organ such as the heart and the like, and thus not preferable.

In the present disclosure, the 3D model may be characterized to be an organ model such as the heart and the like, and may be characterized to be one that is prepared in a 3D printing method and the like.

In another aspect, the present disclosure relates to a preparation method for a coating solution composition for a 3D model, that includes mixing a rubber material and an organic solvent.

In the present disclosure, the rubber material may be characterized to be one or more selected from a group consisting of silicone, urethane, styrene butadiene rubber (SBR), chloroprene rubber (CR), chlorinated polyethylene (CPE), butadiene rubber (BR), styrene-butadiene (SB), copolymer latex, ethylene propylene diene monomer (EPDM), ethylene vinyl acetate (EVA), styrene butadiene styrene (SBS), acrylic rubber (ACM/ANM), sulfide polymer, nitrile rubber (NBR), chloroprene rubber (CR), chlorosulfonated polyethylene rubber (CSM), butyl rubber (isobutylene isoprene rubber, IIR), and fluororubber (FPM), but there is no limitation thereto.

In the present disclosure, the organic solvent may be characterized to be one or more selected from a group consisting of acetone, cyclohexane, chloroform, 1,2-dichloroethane, toluene, trichloroethane, trichlorobenzene, benzene carbon tetrachloride, chlorobenzene, tetrahydrofuran (THF), xylene, tertiary butyl acetate, heptane, hexane, dimethyl ether, 2-butanone, methanol, butanone and naphtha, but there is not limited thereto.

In the present disclosure, tin may be further included as a catalyst.

In the present disclosure, when mixing the rubber material and the organic solvent, a concentration of the coating solution composition may be adjusted so that the rubber material is, preferably, 30 to 50% by weight with respect to a total 100% by weight of the coating solution composition for a 3D model. If the content of the rubber material exceeds 50% by weight, it is difficult to form a uniform coating thickness, decreasing the ease of operation, and if the content of the rubber material is less than 30% by weight, it is not possible to express the property of the actual organ such as the heart and the like, and thus not preferable.

In the present disclosure, the 3D model may be characterized to be an organ model such as the heart and the like, and may be characterized to be one that is prepared in a 3D printing method and the like.

In another aspect, the present disclosure relates to a preparation method for a 3D model, that includes coating a 3D printing model with the aforementioned coating solution composition for a 3D model.

In the present disclosure, the coating may have a thickness of, preferably, 0.5 to 10.0 mm. It is possible to finely adjust the elasticity and strength of an organ model by adjusting the concentration or number of coating times of the coating solution and thereby adjust the coating thickness. The coating thickness being outside the aforementioned range is not preferable due to difference of characteristics such as texture and the like compared to the actual organ.

In the present disclosure, the coating method may be one or more selected from a group consisting of dip coating, spraying, and brushing, but there is no limitation thereto.

### [Examples]

Hereinbelow, the present disclosure will be described in detail through examples. These examples are for illustrative purposes only, and it will be apparent to those of ordinary skill in the related art that the scope of the present invention is not construed as being limited by these examples. Therefore, it is to be noted that the practical scope of the present disclosure is defined by the attached claims and their equivalents.

### Example 1: Preparing Coating Solution Composition for 3D Model

### 1-1: Preparing Coating Solution Composition for 3D model

A silicone rubber material and a tetrahydrofuran (THF) solvent were mixed, together with tin, as a catalyst, to prepare a coating solution composition for a 3D model. The concentration of the silicone rubber material was adjusted according to the content of the THF solvent. With respect to a total of 100% by weight of the coating solution composition, the concentration of the silicone rubber material was adjusted to be 30% by weight and 50% by weight, to prepare coating solution composition for a 3D model 1 and coating solution composition for a 3D model 2, respectively.

### 1-2: Preparing Comparative Examples

A case of not using the coating solution composition for a 3D model, that is, where the 3D model is not coated was supposed as Comparative Example 1.

Comparative Example 2 was prepared by mixing acetone instead of the THF solvent, with other conditions being the same as Example 1-1.

Comparative Example 3 was prepared by mixing platinum (Pt) instead of tin, with other conditions being the same as Example 1-1.

### Example 2: Preparing Coated 3D model

A coated 3D model was prepared by dip coating, with the coating solution compositions for a 3D model 1 and 2prepared in the aforementioned Example 1, and with Comparative Examples 1 to 3, an acrylate-based copolymer 3D-printed heart model that is output in a 3D printing method upon heart modeling based on a patient's medical image, and then drying the same.

### Example 3: Characteristics Check

Characteristics of the 3D model coated with the coating solution compositions for a 3D model 1 and 2 prepared in the aforementioned Example 2, and characteristics of the 3D model coated with Comparative Examples 1 to 3 were checked.

It was discovered that Comparative Example 2 is not suitable to be used in preoperative simulations due to its harmful smell and non-reusability (one-time use) and the like, and in the case of Comparative Example 3, it was discovered that there is a problem of peeling off when coating a model prepared by 3D printing because surface hardening did not occur.

Properties such as the tensile strength, tear strength and the like of coating solution compositions for a 3D model 1 and 2, and of Comparative Example 1, were checked. As a result, is was discovered that the higher the concentration of the coating solution (the order being Comparative Example 1 → coating solution composition for a 3D model 1 → coating solution composition for a 3D model 2), the coating thickness gets greater, the tensile strength, tear strength and modulus of elasticity get lower, and the elongation gets greater. Since the tear strength and tensile strength depend on the thickness, the higher the concentration of the coating solution, the tear strength and tensile strength get lower due to the increased coating thickness. In addition, as the concentration of the coating solution increases, the silicon component increases and the amorphous portion on the surface of the 3D printing model increases, thereby lowering the tensile strength and increasing the elongation. It was discovered that, considering the modulus of elasticity and elongation, coating solution compositions for a 3D model 1 and 2, having concentrations of 30 to 50% by weight, are suitable to be used in preoperative simulations, in order to show the texture of an organ such as the actual heart and the like without being torn during the suture test (Table 1).

**[Table 1]**

| | Comparative Example 1 | Coating Solution Composition for a 3D Model 1 | Coating Solution Composition for a 3D Model 2 |
|---|---|---|---|
| Concentration of Rubber Material (weight%) | 0 | 30 | 50 |
| Thickness of Coating (mm) | 0 | 0.15 | 0.35 |
| Tensile Strength (ASTM D412) (MPa) | 2.66 | 2.23 | 2.11 |
| Tear Strength (ASTM D624) (kN/m) | 5.89 | 5.12 | 4.84 |
| Elongation (ASTM D412) (%) | 226 | 246 | 257 |
| Modulus of Elasticity (ASTM D412) (MPa) | 0.55 | 0.52 | 0.50 |

### Example 4: Suture Test

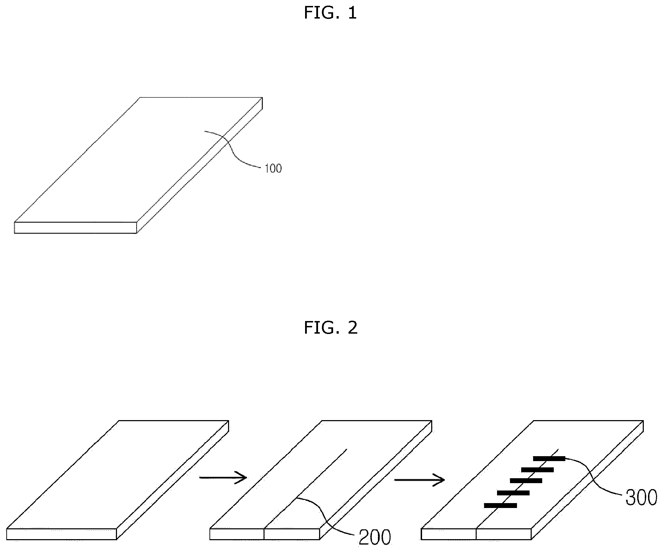

For the suture test, a substrate of the shape of a bar (20.0 mm X 50.0 mm X 1.5 mm, width X length X thickness) was prepared (FIG. 1). The substrate was coated with the coating solution composition for a 3D model 2 of Example 1 in a dip coating method, and then dried, to prepare a coated 3D model, and then was cut from the 10.0 mm point from the bottom to the 30.0 mm point starting from the left of the bar sample. Points that were 1-2 mm apart from the cut points at both sides were sutured using surgical thread and scissors (FIG. 2).

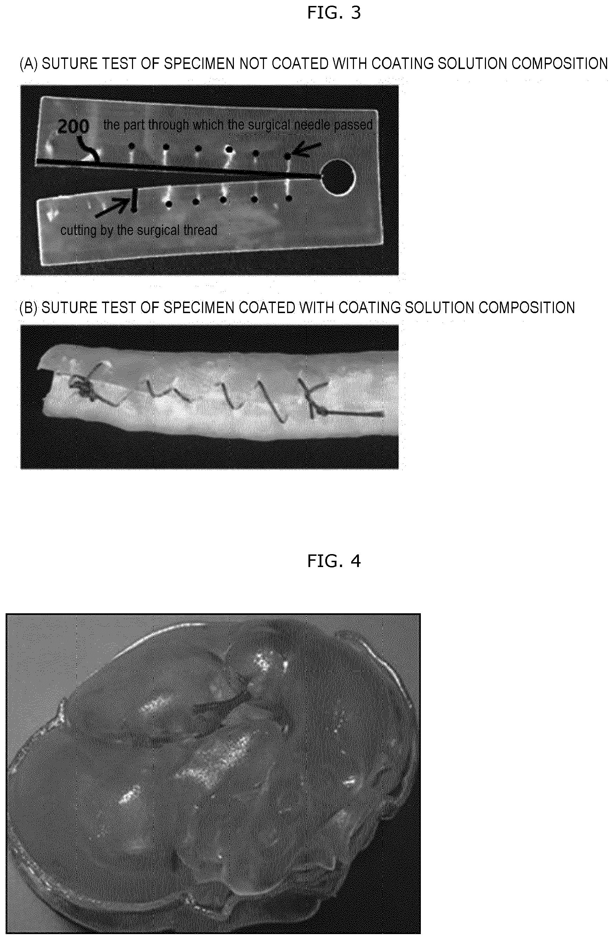

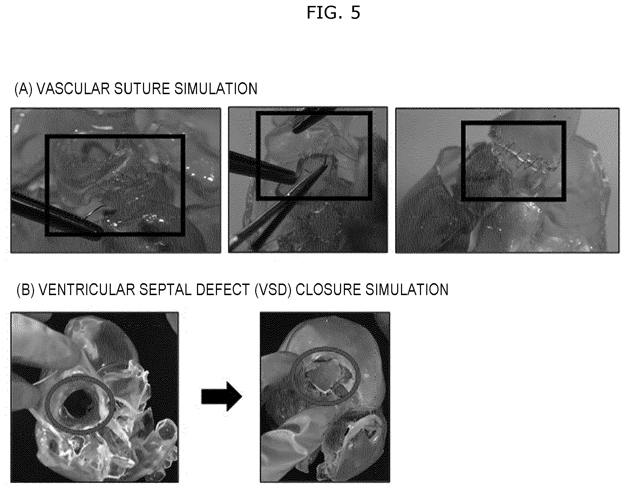

As a result of a vascular suture simulation and ventricular septal defect (VSD) closure simulation, it was discovered that in the case where the model was not coated with the coating solution composition for a 3D model 2 of Example 1, when suturing, it was torn vertically from the part through which the thread passed, and the texture was very different from the actual organ, but in the case where the model was coated with the coating solution composition for a 3D model 2 of Example 1, it was not torn when suturing, and the texture was similar to the organ such as the actual heart and the like (FIGs. 3 to 5).

As described above, specific parts of the present disclosure have been described in detail, and for those of ordinary skill in the artit will be obvious that these specific techniques are only preferred embodiments for those of ordinary skill in the art, and the scope of the present disclosure is not limited thereby. Accordingly, the practical scope of the present disclosure is defined by the attached claims and their equivalents.

## Claims

1. A coating solution composition for a 3D model, comprising a rubber material and an organic solvent.

2. The coating solution composition for a 3D model, according to claim 1,
wherein the rubber material is one or more selected from a group consisting of silicone, urethane, styrene butadiene rubber (SBR), chloroprene rubber (CR), chlorinated polyethylene (CPE), butadiene rubber (BR), styrene-butadiene (SB) copolymer latex, ethylene propylene diene monomer (EPDM), ethylene vinyl acetate (EVA), styrene butadiene styrene (SBS), acrylic rubber (ACM/ANM), sulfide polymer, nitrile rubber (NBR), chloroprene rubber (CR), chlorosulfonated polyethylene rubber (CSM), butyl rubber (isobutylene isoprene rubber, IIR) and fluororubber (FPM).

3. The coating solution composition for a 3D model, according to claim 1,
wherein the organic solvent is one or more selected from a group consisting of acetone, cyclohexane, chloroform, 1,2-dichloroethane, toluene, trichloroethane, trichlorobenzene, benzene carbon tetrachloride, chlorobenzene, tetrahydrofuran (THF), xylene, tertiary butyl acetate, heptane, hexane, dimethyl ether, 2-butanone, methanol, butanone and naphtha.

4. The coating solution composition for a 3D model, according to claim 1,
further comprising tin.

5. The coating solution composition for a 3D model, according to claim 1,
wherein the rubber material is 30 to 50% by weight with respect to a total of 100% by weight of the coating solution composition for a 3D model.

6. The coating solution composition for a 3D model, according to claim 1,
wherein the 3D model is an organ model.

7. The coating solution composition for a 3D model, according to claim 1,
wherein the 3D model is prepared by 3D printing.

8. A preparation method of a coating solution composition for a 3D model, comprising mixing a rubber material and an organic solvent.

9. The preparation method of a coating solution composition for a 3D model, according to claim 8,
wherein the rubber material is one or more selected from a group consisting of silicone, urethane, styrene butadiene rubber (SBR), chloroprene rubber (CR), chlorinated polyethylene (CPE), butadiene rubber (BR), styrene-butadiene (SB) copolymer latex, ethylene propylene diene monomer (EPDM), ethylene vinyl acetate (EVA), styrene butadiene styrene (SBS), acrylic rubber (ACM/ANM), sulfide polymer, nitrile rubber (NBR), chloroprene rubber (CR), chlorosulfonated polyethylene rubber (CSM), butyl rubber (isobutylene isoprene rubber, IIR) and fluororubber (FPM).

10. The preparation method of a coating solution composition for a 3D model, according to claim 8,
wherein the organic solvent is one or more selected from a group consisting of acetone, cyclohexane, chloroform, 1,2-dichloroethane, toluene, trichloroethane, trichlorobenzene, benzene carbon tetrachloride, chlorobenzene, tetrahydrofuran (THF), xylene, tertiary butyl acetate, heptane, hexane, dimethyl ether, 2-butanone, methanol, butanone and naphtha.

11. The preparation method of a coating solution composition for a 3D model, according to claim 8,
further comprising tin.

12. The preparation method of a coating solution composition for a 3D model, according to claim 8,
wherein, when mixing the rubber material and the organic solvent, adjusting a concentration of the coating solution composition so that the rubber material is 30 to 50% by weight with respect to a total of 100% by weight of the coating solution composition for a 3D model.

13. The preparation method of a coating solution composition for a 3D model, according to claim 8,
wherein the 3D model is an organ model.

14. The preparation method of a coating solution composition for a 3D model, according to claim 8,
wherein the 3D model is prepared by 3D printing.

15. A preparation method of a 3D model, comprising coating a 3D printing model with the coating solution composition for a 3D model according to any one of claims 1 to 7.

16. The preparation method of a 3D model, according to claim 15, wherein the 3D printing model is coated to have a thickness of 0.5 to 10.0 mm.

17. The preparation method of a 3D model, according to claim 15, wherein the 3D printing model is coated in one or more method selected from a group consisting of dip coating, spraying and brushing.
